# EUROPÄISCHE PATENTSCHRIFT

(11) **EP 2 895 288 B1**
(45) Veröffentlichungstag und Bekanntmachung des Hinweises auf die Patenterteilung: **16.01.2019**
(21) Anmeldenummer: 13759532.8
(22) Anmeldetag: 10.09.2013
(51) Int. Cl.: B23B 31/107, B25D 17/08, B25B 23/00

(54) **HANDWERKZEUGMASCHINE**
HAND TOOL
OUTIL À MAIN

(30) Priorität: 12.09.2012 DE 102012216137
(43) Veröffentlichungstag der Anmeldung: 22.07.2015
(73) Patentinhaber: Hilti Aktiengesellschaft, 9494 Schaan (LI)
(72) Erfinder: FUNK, Alexander, 86830 Schwabmünchen (DE); WIDMER, Louis, CH-9631 Ulisbach (CH)
(74) Vertreter: Hilti Aktiengesellschaft Corporate Intellectual Property
(86) Internationale Anmeldenummer: PCT/EP2013/068704
(87) Internationale Veröffentlichungsnummer: WO 2014/040980

(56) Entgegenhaltungen:
- DE-A1-102007 005 033
- GB-A- 2 401 817
- US-A- 1 814 274

## Beschreibung

### GEBIET DER ERFINDUNG

Die vorliegende Erfindung betrifft eine Handwerkzeugmaschine, insbesondere einen Elektroschrauber, nach dem Oberbegriff von Anspruch 1 und wie aus der DE 10 2007 005033 A1 bekannt.

US 5,398,946 A beschreibt einen Elektroschrauber, in dessen Werkzeughalterung ein Schrauberbit ohne Betätigen der Werkzeughalterung einsetzbar ist. Das Schrauberbit kann entnommen werden, indem eine Betätigungshülse zusammen mit dem Werkzeug in eine gemeinsame Entnahmerichtung verschoben wird.

### OFFENBARUNG DER ERFINDUNG

Die erfindungsgemäße Handwerkzeugmaschine hat einen Elektromotor und eine Abtriebsspindel, die von dem Elektromotor um einer Arbeitsachse drehend antreibbar ist. Die Abtriebsspindel hat einen längs einer Arbeitsachse orientieren, abtriebsseitig offenen, zylindrischen oder prismatischen Aufnahmeraum zum Aufnehmen eines Werkzeugs entgegen einer Entnahmerichtung und zwei in den Aufnahmeraum in radialer Richtung einstechende Langlöcher. In den Langlöchern ist jeweils ein Sperrkörper, der in dem Langloch liegend in den Aufnahmeraum hineinragt und zwischen einem abtriebsseitigen Ende des Langlochs und einem antriebsseitigen Ende des Langlochs beweglich ist. An einem radialen Anschlag in radialer Richtung anliegend ist der Sperrkörper in den Aufnahmeraum eingreifend gezwungen. Der Anschlag überlappt in einer verriegelnden Stellung mit den abtriebsseitigen Enden der Langlöcher und ist in Entnahmerichtung gegen eine Federkraft einer Feder zum Freigeben einer radialen Bewegung des Sperrkörpers aus dem Eingriff mit dem Aufnahmeraum verschiebbar. Eine Feder hat einen Stützring, zwei von dem Stützring in Entnahmerichtung vorstehende und kreissegmentförmig um den Aufnahmeraum gebogene Bügel und jeweils von jedem der Bügel einen in Entnahmerichtung vor dem Sperrkörper in das Langloch radial eingreifenden Stift.

Die federnd wirkenden Bügel drücken die Sperrkörper in eine verriegelnde Stellung, wodurch sie an einem radialen Ausweichen aus dem Aufnahmeraum gehindert sind. Beim Einsetzen eines Werkzeugs kann der Anwender die Sperrkörper samt den Bügeln zu dem antriebsseitigen Ende der Langlöcher schieben. Hier können die Sperrkörper radial ausweichen.

Die Feder mit den vorzugsweise symmetrisch ausgestalteten Bügeln ist sehr kompakt. Zudem vermeidet der symmetrische, insbesondere spiegelsymmetrische Aufbau querverlaufende Kräfte, welche zu einem Kippen von Komponenten gegenüber der Arbeitsachse und einem potentiellen Verkanten führen können.

Eine Ausgestaltung sieht vor, dadurch gekennzeichnet, dass der Stützring geschlitzt ist, und die beiden Bügel an jeweils einer Seite des Schlitzes angesetzt sind. Die Bügel können gegenüber dem Stützring um einen Anstellwinkel geneigt sein, insbesondere in einem entspannten Zustand der Feder. Die Bügel umspannen die Arbeitsachse vorzugsweise nur teilweise, z.B. um weniger als 180 Grad, z.B. für etwa 90 Grad.

Eine Ausgestaltung sieht vor, dass der Stützring, die Bügel und die Stifte aus einem zusammenhängenden Stück Draht gebildet sind.

Eine Ausgestaltung sieht vor, dass sich entgegen der Entnahmerichtung an den radialen Anschlag eine Rampe anschließt. Die Rampe weist eine entgegen der Entnahmerichtung sich von der Arbeitsachse entfernenden Fläche auf. Die beim Einsetzen des Werkzeugs ausgelenkten Sperrkörper erfahren durch die Feder eine Kraft in Entnahmerichtung, welche durch die von der Rampe gebildete Kulisse in eine teilweise zu der Arbeitsachse wirkende Kraft umgelenkt wird. Die Sperrkörper werden hierdurch sicher in Eingriff mit dem Aufnahmeraum und dem darin befindlichen Werkzeug geführt.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Elektroschrauber

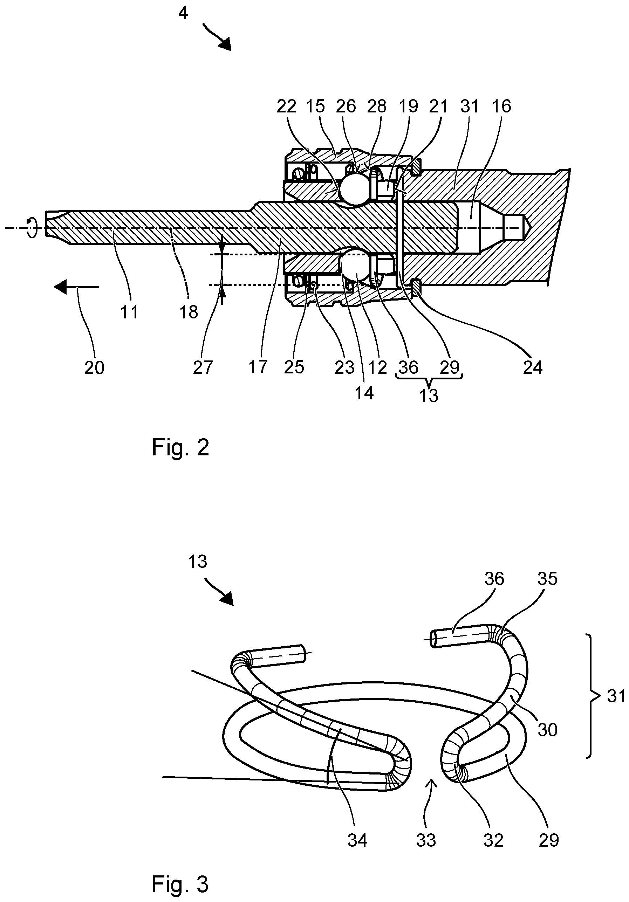

- Fig. 2: eine Werkzeughalterung des Elektroschraubers
- Fig. 3: eine Feder der Werkzeughalterung

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

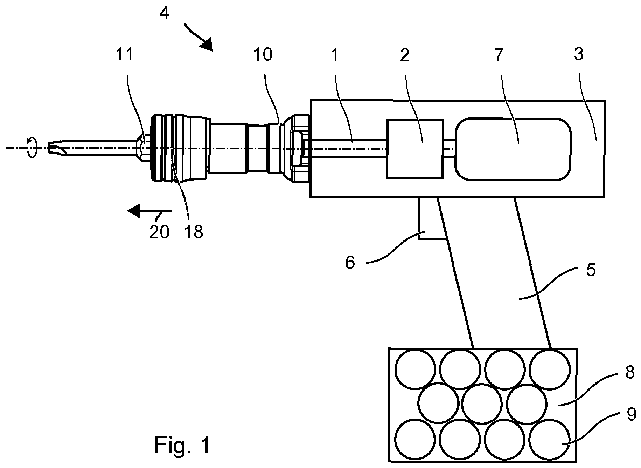

Fig. 1 zeigt schematisch einen Elektroschrauber **4.** Der Elektroschrauber **4** hat einen Werkzeughalter **10** zum Aufnehmen eines Werkzeugs **11** mit einem prismatischen Schaft, z.B. einem Schrauberbit. Ein Elektromotor **7** ist über einen Antriebsstrang mit der Werkzeughalterung **10** gekoppelt, um diese im Betrieb um eine Arbeitsachse **18** drehend anzutreiben. Der Werkzeughalter **10** ist starr und vorzugsweise dauerhaft mit einer Abtriebsspindel **1** verbunden. Der Antriebsstrang kann ein Getriebe **2,** eine Drehmomentkupplung, z.B. eine einstellbare Drehmomentkupplung, enthalten. Ein Gehäuse **3** des Elektroschrauber **4** ist mit einem Handgriff **5** zum Führen des Elektroschrauber **4** und einem Systemtaster **6** zum in Betrieb nehmen des Elektroschrauber **4** durch den Anwender versehen. Eine Energieversorgung des Elektromotors **7** erfolgt beispielsweise über ein abnehmbares Batteriepaket **8** aus mehreren sekundären Batteriezellen **9.**

Der Werkzeughalter **10** ist für eine selbsttätige Verriegelung des Werkzeugs **11** ausgelegt. Die Sperrkörper **12** können beim Einsetzen des Werkzeugs **11** ausweichen. Danach greifen die Sperrkörper **12** getrieben durch eine Feder **13** in eine Ringnut **14** des Werkzeugs **11** ein. Die Sperrkörper **12** verhindern ein Ausziehen oder Herausfallen des Werkzeugs **11.** Ein Anwender kann durch Verschieben einer Betätigungshülse **15,** die Verriegelung durch die Sperrkörper **12** aufheben und das Werkzeug **11** entnehmen.

Der Werkzeughalter **10** hat einen prismatischen Aufnahmeraum **16,** z.B. mit einen regelmäßig sechsflächigen Hohlraum. Der Aufnahmeraum **16** ist beispielsweise komplementär zu den vorgesehenen Werkzeugen mit einem sechsflächigen Schaftende **17,** z.B. einem Schrauberbit. Der Aufnahmeraum **16** ist koaxial zu der Arbeitsachse **18** in der Abtriebsspindel **1** ausgebildet. Zwei diametral gegenüberliegende Langlöcher **19** in der Abtriebsspindel **1** öffnen den Aufnahmeraum **16** in radialer Richtung. Die Langlöcher **19** sind mit ihrer größeren Abmessung parallel zu der Arbeitsachse **18** orientiert. Eine Länge (Abmessung längs der Arbeitsachse **18**) eines Langlochs **19** ist zwischen 50 % und 150 % größer als eine Breite (Abmessung in Umfangsrichtung um die Arbeitsachse **18**) des Langlochs **19.** Die Langlöcher **19** sind in Entnahmerichtung **20** des Werkzeugs **11** geschlossen. In jedem der Langlöcher **19** liegt eine Kugel **12**, welche ein beispielhaftes Sperrkörper ausbildet. Die Kugel **12** kann teilweise in den Aufnahmeraum **16** hineinragen. Eine Eindringtiefe in den Aufnahmeraum **16** ist durch das Profil des Langlochs **19** begrenzt. Das Sperrkörper kann längs der Arbeitsachse **18** in dem Langloch **19** bewegt werden, die Bewegung in Entnahmerichtung **20** ist durch eine abtriebsseitige Stirnfläche **21** und die Bewegung entgegen der Entnahmerichtung **20** durch eine antriebsseitige Stirnfläche **22** des Langlochs **19** begrenzt.

Die Betätigungshülse **15** umschließt den Aufnahmeraum **16** auf Höhe der Langlöcher **19.** Die Betätigungshülse **15** wird durch eine Schraubenfeder **23** entgegen der Entnahmerichtung **20** an einen Anschlag **24** gedrückt. Diese Stellung ist die Grundstellung. Die Schraubenfeder **23** ist beispielsweise unter Vorspannung zwischen der Betätigungshülse **15** und einem Sprengring **25** an der Abtriebsspindel **1** eingespannt. Der Anschlag **24** ist beispielsweise ein Sprengring. Ein Anwender kann gegen die Kraft der Schraubenfeder **23** die Betätigungshülse **15** in Entnahmerichtung **20** parallel zu der Arbeitsachse **18** verschieben.

Die Betätigungshülse **15** ist an ihrer Innenfläche mit einer vorzugsweise rotationssymmetrischen Kontur versehen. Die Kontur hat eine zu der Arbeitsachse **18** parallele Fläche **26**, die den geringsten Abstand zu der Arbeitsachse **18** aufweist. Die Fläche **26** dient dem Sperren einer radialen Bewegung der Kugel **12,** und wird daher nachfolgend als Sperrfläche **26** bezeichnet. Der radiale Abstand **27** der Sperrfläche **26** ist derart bemessen, dass wenn die Kugel **12** die Sperrfläche **26** berührt, ein Teil der Kugel **12** in den Aufnahmeraum **16** ragt. Der radiale Abstand **27** der Sperrfläche **26** zu dem Aufnahmeraum **16** ist geringer als die radiale Abmessung des Sperrkörpers **12.** Die Sperrfläche **26** liegt an der Kugel **12** tangential an, wenn die Betätigungshülse **15** in Grundstellung und die Kugel **12** an der abtriebsseitigen Stirnfläche **22** anliegt. Eine zu der Arbeitsachse **18** geneigte Rampe **28** schließt sich entgegen der Entnahmerichtung **20** an die Sperrfläche **26** an. Die Rampe **28** erhöht entgegen der Entnahmerichtung **20** ihren Abstand zu der Arbeitsachse **18.** Am Ende der Rampe **28** ist der radiale Abstand wenigstens so groß, dass die Kugel **12** in radialer Richtung vollständig aus dem Aufnahmeraum **16** austreten kann.

Ein Feder **13** drückt die beiden Kugeln **12** in Entnahmerichtung **20.** Die Kugeln **12** werden durch die Feder **13** in der Grundstellung gehalten und liegen an der abtriebsseitigen Stirnfläche **22** des Langlochs **19** an. Die Feder **13** hat einen Stützring **29,** welcher an der Abtriebsspindel **1** anliegt. Zwei Bügel **30** stehen von dem Stützring **29** in Entnahmerichtung **20** ab. Die beiden Bügel sind vorzugsweise gleich oder spiegelsymmetrisch zueinander ausgebildet. Der Bügel **30** hat einen gebogenen Abschnitt **31,** der kreissegmentförmig um die Arbeitsachse **18** verläuft. Der Bügel **30** umspannt beispielsweise etwa 90 Grad. Der Radius des Abschnitts **31** ist vorzugsweise gleich dem Radius des Stützrings **29.** Ein Fußende **32** des Bügels **30** ist mit dem Stützring **29** materialschlüssig verbunden. Die Fußenden **32** der beiden Bügel **30** können einander gegenüberliegend an einem Schlitz **33** in dem Stützring **29** angeordnet sein. Beispielsweise ist die Feder **13** aus einem Draht gebogen. Der Bügel **30** geht nahtlos in den Stützring **29** über. Der Draht ist im Bereich des Fußendes **32** um etwas weniger als 180 Grad um eine Achse gebogen, die senkrecht auf der Arbeitsachse **18** steht. Der Bügel **30** ist gegenüber dem Stützring **29** um einen Anstellwinkel **34** gekippt. Der Anstellwinkel **34** liegt im Bereich von 10 Grad bis 25 Grad. An ein Kopfende **35** des Bügels **30** schließt sich ein Stift **36** an. Die beiden Stifte **36** liegen einander diametral gegenüber, bezogen auf die Arbeitsachse **18.** Der Stift **36** steht vorzugsweise senkrecht auf der Arbeitsachse **18.** Alternativ kann der Stift **36** um einen Winkel von bis zu 10 Grad gegenüber der Arbeitsachse **18** entgegen der Entnahmerichtung **20** geneigt sein. Der Stift **36** verläuft hierbei von dem Kopfende **35** zu der Arbeitsachse **18** entgegen der Entnahmerichtung **20.** Eine radiale Abmessung des Stifts **36** ist derart bemessen, dass der Stift **36** längs der radialen Richtung wenigstens mit der Hälfte der Kugel **12** überlappt. Der Stift **36** greift in das Langloch **19** in Entnahmerichtung **20** vor der Kugel **12** ein. Der Stift **36** drückt vorzugsweise mit einer Vorspannung die Kugel **12** an die hintere Stirnfläche **22.**

## Patentansprüche

1. Handwerkzeugmaschine mit
einem Elektromotor (7),
einer Abtriebsspindel (1), die von dem Elektromotor (7) um einer Arbeitsachse (18) drehend antreibbar ist und die einen längs einer Arbeitsachse (18) orientieren, abtriebsseitig offenen, zylindrischen oder prismatischen Aufnahmeraum (16) zum Aufnehmen eines Werkzeugs (11) entgegen einer Entnahmerichtung (20) und zwei in den Aufnahmeraum (16) in radialer Richtung einstechende Langlöcher (19) hat,
zwei Sperrkörpern (12), die jeweils in einem der Langlöcher (19) liegend in den Aufnahmeraum (16) hineinragen und zwischen einem abtriebsseitigen Ende (22) des Langlochs (19) und einem antriebsseitigen Ende (21) des Langlochs (19) beweglich sind,
einem radialen Anschlag (26), an dem in radialer Richtung anliegend der Sperrkörper (12) in den Aufnahmeraum (16) eingreifend gezwungen ist, der in einer verriegelnden Stellung mit den abtriebsseitigen Enden (22) der Langlöcher (19) überlappt und in Entnahmerichtung (20) gegen eine Federkraft einer Feder (23) zum Freigeben einer radialen Bewegung des Sperrkörpers (12) aus dem Eingriff mit dem Aufnahmeraum (16) verschiebbar ist, **gekennzeichnet durch**
eine Feder (13), die einen Stützring (29), zwei von dem Stützring (29) in Entnahmerichtung (20) vorstehende und kreissegmentförmig um den Aufnahmeraum (16) gebogene Bügel (30) und jeweils von jedem der Bügel (30) einen in Entnahmerichtung (20) vor dem Sperrkörper (12) in das Langloch (19) radial eingreifenden Stift (36) aufweist.

2. Handwerkzeugmaschine nach Anspruch 1, **dadurch gekennzeichnet, dass** die Bügel (30) spiegelsymmetrisch zueinander angeordnet sind.

3. Handwerkzeugmaschine nach Anspruch 1 oder 2, **dadurch gekennzeichnet, dass** der Stützring (29) geschlitzt ist, und die beiden Bügel (30) an jeweils einer Seite des Schlitzes (33) angesetzt sind.

4. Handwerkzeugmaschine nach einem der vorhergehenden Ansprüche, **dadurch gekennzeichnet, dass** die Bügel (30) gegenüber dem Stützring (29) um einen Anstellwinkel (34) geneigt sind.

5. Handwerkzeugmaschine nach einem der vorhergehenden Ansprüche, **dadurch gekennzeichnet, dass** die Bügel (30) um weniger als 180 Grad die Arbeitsachse (18) umspannen.

6. Handwerkzeugmaschine nach einem der vorhergehenden Ansprüche, **dadurch gekennzeichnet, dass** der Stützring (29), die Bügel (30) und die Stifte (36) aus einem zusammenhängenden Stück Draht gebildet sind.

7. Handwerkzeugmaschine nach einem der vorhergehenden Ansprüche, **dadurch gekennzeichnet, dass** entgegen der Entnahmerichtung (20) an den radialen Anschlag (26) eine Rampe (28) anschließt, wobei die Rampe (28) entgegen der Entnahmerichtung (20) eine sich von der Arbeitsachse (18) entfernenden Fläche (26) aufweist.

## Claims

1. Hand-held power tool, comprising
an electric motor (7),
an output spindle (1) that can be driven in rotation about a working axis (18) by the electric motor (7), said output spindle being provided with a cylindrical or prismatic receiving space (16) oriented along a working axis (18) and open on the output side for receiving a tool (11) in the opposite direction to a removal direction (20), as well as with two elongated holes (19) cutting into the receiving space (16) in the radial direction,
two blocking elements (12) each situated in one of the elongated holes (19), projecting into the receiving space (16) and being movable between an output end (22) of the elongated hole (19) and a drive end (21) of the elongated hole (19), and
a radial stop (26) against which the blocking element (12) bears in the radial direction and is thus forced to engage in the receiving space (16), said radial stop overlapping with the output ends (22) of the elongated holes (19) in a locking position and being displaceable against a spring force of a spring (23) in the removal direction (20) in order to enable a radial movement of the blocking element (12) out of engagement with the receiving space (16), **characterised by** a spring (13) having a supporting ring (29), two side pieces (30) projecting from the supporting ring (29) in the removal direction (20) and bent around the receiving space (16) in the form of a segment of a circle, as well as respective pins (36) each extending from one of the side pieces (30) and engaging radially in the elongated hole (19) upstream of the blocking element (12) in the removal direction (20).

2. Hand-held power tool according to claim 1, **characterised in that** the side pieces (30) are arranged in mirror symmetry relative to one another.

3. Hand-held power tool according to claim 1 or claim 2, **characterised in that** the supporting ring (29) is slotted and the two side pieces (30) are attached one on either side of the slot (33).

4. Hand-held power tool according to one of the preceding claims, **characterised in that** the side pieces (30) are inclined at an angle of inclination (34) relative to the supporting ring (29).

5. Hand-held power tool according to one of the preceding claims, **characterised in that** the side pieces (30) extend by less than 180 degrees around the working axis (18).

6. Hand-held power tool according to one of the preceding claims, **characterised in that** the supporting ring (29), the side pieces (30) and the pins (36) are formed from one continuous piece of wire.

7. Hand-held power tool according to one of the preceding claims, **characterised in that** the radial stop (26) is followed in the opposite direction to the removal direction (20) by a ramp (28), said ramp (28) having a surface (26) at an increasing distance from the working axis (18) in the opposite direction to the removal direction (20).

## Revendications

1. Machine-outil manuelle comportant :
un moteur électrique (7),
une broche entraînée (1) qui peut être entraînée en rotation autour d'un axe de travail (18) par le moteur électrique (7) et qui a un espace de réception (16) cylindrique ou prismatique, ouvert côté entraîné, orienté le long d'un axe de travail (18) pour recevoir un outil (11) à l'opposé d'une direction de retrait (20) et deux trous oblongs (19) dans l'espace de réception (16) pointant dans une direction radiale,
deux éléments de blocage (12) situés dans l'espace de réception (16) qui font respectivement saillie dans l'un des trous oblongs (19) et qui sont mobiles entre une extrémité côté entraîné (22) du trou oblong (19) et une extrémité côté moteur (21) du trou oblong (19),
une butée radiale (26) contre laquelle l'élément de blocage (12) vient en butée dans la direction radiale et est contraint de s'engager dans l'espace de réception (16), laquelle butée radiale chevauche les extrémités côté entraîné (22) des trous oblongs (19) dans une position bloquante et qui peut être déplacée dans la direction de retrait (20) à l'encontre d'une force élastique d'un ressort (23) afin de libérer un mouvement radial de l'élément de blocage (12) pour se désengager de l'espace de réception (16), **caractérisée par**
un ressort (13) comportant une bague de support (29), deux arceaux (30) recourbés en forme de segment circulaire autour de l'espace de réception (16) et faisant saillie depuis la bague de support (29) dans la direction de retrait (20), et comportant, à partir de chacun des arceaux (30), une tige (36) qui s'engage radialement dans le trou oblong (19) à l'avant de l'élément de blocage (12) dans la direction de retrait (20).

2. Machine-outil manuelle selon la revendication 1, **caractérisée en ce que** les arceaux (30) sont agencés de manière symétrique l'un par rapport à l'autre.

3. Machine-outil manuelle selon la revendication 1 ou 2, **caractérisée en ce que** la bague de support (2) est fendue et les deux arceaux (30) sont respectivement fixés sur un côté de la fente (33).

4. Machine-outil manuelle selon l'une des revendications précédentes, **caractérisée en ce que** les arceaux (30) sont inclinés d'un certain angle d'inclinaison (34) par rapport à la bague de support (29).

5. Machine-outil manuelle selon l'une des revendications précédentes, **caractérisée en ce que** les arceaux (30) couvrent l'axe de travail (18) de moins de 180 degrés.

6. Machine-outil manuelle selon l'une des revendications précédentes, **caractérisée en ce que** la bague de support (29), les arceaux (30) et les broches (36) sont formés à partir d'un morceau de fil continu.

7. Machine-outil manuelle selon l'une des revendications précédentes, **caractérisée en ce qu'**une rampe (28) est adjacente à la butée radiale (26) à l'opposé de la direction de retrait (20), dans laquelle la rampe (28) comporte une surface (26) partant de l'axe de travail (18) à l'opposé de la direction de retrait (20).
